# EUROPEAN PATENT SPECIFICATION

(11) **EP 4 384 847 B1**
(45) Date of publication and mention of the grant of the patent: **07.10.2026**
(21) Application number: 22765499.3
(22) Date of filing: 12.08.2022
(51) Int. Cl.: G01S 7/40, G01S 7/41, G01S 13/931

(54) **METHODS AND APPARATUS FOR RADAR ALIGNMENT DETERMINATION**
VERFAHREN UND VORRICHTUNG ZUR RADARAUSRICHTUNGSBESTIMMUNG
PROCÉDÉS ET APPAREIL DE DÉTERMINATION D'ALIGNEMENT DE RADAR

(30) Priority: 13.08.2021 GB 202111661
(43) Date of publication of application: 19.06.2024
(73) Proprietor: Jaguar Land Rover Limited, Coventry, Warwickshire CV3 4LF (GB)
(72) Inventor: TZAGKAS, Dimitrios, Coventry Warwickshire CV3 4LF (GB)
(74) Representative: Jaguar Land Rover Patents Department
(86) International application number: PCT/EP2022/072700
(87) International publication number: WO 2023/017163

(56) References cited:
- EP-A1- 3 279 683
- EP-A1- 3 318 889
- US-B2- 6 900 755

## Description

### TECHNICAL FIELD

The present disclosure relates to methods and systems for radar alignment determination. Aspects of the invention relate to a control system for use with a vehicle having a radar sensor, a system comprising the control system and the radar sensor, a vehicle comprising the control system and the radar sensor, and a method for determining alignment of a radar system of a vehicle.

### BACKGROUND

It is known to provide a vehicle, such as a wheeled vehicle, with a radar sensor. The radar sensor may be configured to detect objects in the vicinity of the vehicle. The detection of such objects may be used for a variety of functions, including autonomous driving functions and safety functions including automatic braking, which may be used to automatically activate the brakes of the vehicle to slow or stop the vehicle. For example, a radar sensor may be provided generally at the front of the vehicle, and on detecting decreasing distance between the vehicle and an object in the vicinity of the vehicle, may trigger an automatic braking system to avoid collision of the vehicle with the detected object.

A radar sensor emits radiation and receives a signal reflected from an object with a field of view of the radar sensor. The alignment of the radar sensor is important for its function i.e. for it to transmit and receive radiation from objects. If the radar sensor is misaligned in the vertical plane, that is if the radar sensor is facing too far up or down relative to its intended field of view, then the radar sensor may not correctly detect objects. In particular, emitted radiation may be directed toward the ground, or upward into the air rather than toward objects generally in the same vertical plane as the vehicle. Such operation of the radar sensor may be inconvenient for a driver of the vehicle as, for example, an autonomous function of the vehicle may not be available.

It is known to determine or monitor alignment of the field of view of the radar sensor with an axis of the vehicle. For example, it is known to monitor alignment of the radar sensor with respect to a vertical plane in front of the vehicle, or in other words, with respect to a longitudinal axis of the vehicle. That is, the radar sensor may be monitored to attempt to determine whether the radar sensor is correctly aligned such that it may correctly identify objects in the desired field of view of the radar sensor.

It is known to attempt to determine the alignment of the radar sensor by methods based on monitoring for detected objects over a period of time. For example, in the known methods, a radar system may be determined to be misaligned after a predetermined time period has expired whilst the vehicle is operational i.e. being driven and the radar sensor has not detected a sufficient number of objects. That is, it may be determined that the radar sensor is misaligned if the radar sensor does not detect a predetermined number of objects in a predetermined period of time of operation of the vehicle. The detection of objects may be based on radar sensor data output by the radar sensor which indicates a detection of an object. A radar sensor may be continuously receiving radar signals.

The known approaches for determining radar alignment or misalignment have a number of associated problems. Firstly, if radar alignment is based on a number of detections of objects, and the vehicle is operated in an area with few objects, such as a quiet country road, the radar system may be determined to be misaligned even if it is in fact correctly aligned. This may trigger warnings or error messages which may concern or inconvenience the user if the vehicle must then be taken for professional maintenance to clear the error log. If the radar sensor is associated with automated functions, these may be deactivated by the vehicle if the radar sensor is determined as misaligned. Therefore, it is preferable to avoid false positive detections of radar misalignment.

To avoid such false positives, the approaches discussed above may in some examples include a delay after determining that the radar sensor is likely to be misaligned in case the radar sensor detects an object and it can be determined that the radar sensor is not misaligned. However, this leads to a further problem, in that in the case of genuine radar sensor misalignment, it may take an undesirably long time to determine that the radar sensor is misaligned.

US6900755B2 relates to automotive radar systems and more especially but not exclusively it relates to automotive cruise control systems which use radar.

It is an aim of the present invention to address one or more of the disadvantages associated with the prior art.

### SUMMARY OF THE INVENTION

Aspects and embodiments of the invention provide a control system, a system, a vehicle and a method for determining alignment of a radar sensor in a vehicle as claimed in the appended claims.

According to an aspect as disclosed herein, there is provided a control system for use with a vehicle having a radar sensor, the control system being configured to:
receive radar data from the radar sensor indicative of one or more detections of objects in an environment of the vehicle;
determine a relative speed with respect to the vehicle of each of the one or more detected objects;
compare the relative speed of each of the one or more detected objects to an associated speed of the vehicle; and determine alignment of the radar sensor in dependence on the comparison.

According to another aspect of the invention, there is provided a control system for use with a vehicle having a radar sensor, the control system comprising one or more controller, the control system being configured to:
receive radar data from the radar sensor indicative of one or more detections of objects in an environment of the vehicle;
perform a first alignment determination process to determine alignment of a field of view of the radar sensor and a longitudinal axis of the vehicle in dependence on the received radar data;
determine a relative speed with respect to the vehicle of each of the one or more detected objects;
compare the relative speed of each of the one or more detected objects to an associated speed of the vehicle; and
perform a second alignment determination process to determine the alignment of the radar sensor in dependence on the comparison;
wherein the one or more detections of objects used for the comparison include at least one detection having an associated quality measurement of the detection, the associated quality measurement being below a threshold quality; and
wherein the at least one detection having the associated quality measurement below the threshold quality is only used for the second alignment determination process.

Advantageously, the method, and in particular the second alignment determination process, reduces the number of false positive determinations of radar misalignment, by making use of a larger number of detections including low quality detections. For example, in an environment with few detections of objects, the first alignment determination process may determine the radar sensor as misaligned. However, the second alignment determination process may determine the first determination as incorrect based on a less restrictive use of radar data. The low quality detections may be determined as valid detections of stationary objects around the vehicle by virtue of the relative speed comparison. By comparing the relative speed of each detected object to the associated speed of the vehicle, the detected object may be determined to be a stationary object existing around the vehicle.

In certain embodiments, the associated speed is the speed of the vehicle at the time of the respective detection. Advantageously, a detection may be determined to indicate a stationary object around the vehicle if the relative speed of the detected object is similar to the associated speed of the vehicle at the time the object was detected.

In certain embodiments, the quality measurement is a power measurement. Advantageously, low quality measurements may be disregarded for the first alignment determination process, and processing efficiency may be maintained. Advantageously, low quality data may be used to perform a second alignment determination process to confirm or refute the output of the first alignment determination process.

In certain embodiments, the first alignment determination process only uses detections having an associated quality above the threshold quality measurement. Advantageously, processing efficiency is improved, as the amount of data processed in the initial first process is reduced.

In certain embodiments, the second alignment determination process is performed dependent on the first alignment determination process. The second process may be performed when the first process is unable to determine correct alignment of the field of view of the radar sensor and the longitudinal axis of the vehicle. Advantageously, processing efficiency is improved as the second process is only used when the first process is unable to determine alignment. Thus, efficient processing using the high quality radar data used by the first process is achieved and the second alignment determination process is only invoked when required.

In certain embodiments, the detections used for the initial determination of the alignment are also used for control of one or more of vehicle parameters e.g. speed, steering etc. This may be known as Advanced Driver Assistance Systems (ADAS) control. The one or more detections used in the second alignment determination process are detections not used for ADAS control of the vehicle. ADAS may include functions of the vehicle which provide assistance to the driver. Advantageously, the system may continue to operate even when few high quality detections are detected.

In certain embodiments, the second alignment determination process comprises determining that the radar sensor is aligned when at least a proportion of the one or more detected objects have respective relative speeds substantially similar to the associated speed of the vehicle. The detected objects having respective relative speeds substantially similar to the associated speed of the vehicle are determined as stationary objects existing around the vehicle. Advantageously, valid detections of stationary objects can be used to determine that the radar sensor is not misaligned even when few or no high quality detections are present. The radar sensor is not falsely determined as misaligned in an environment with few high quality objects.

In certain embodiments, to compare the relative speed of each of the one or more detected objects to the associated speed of the vehicle, the control system is configured to determine the associated speed of the vehicle as a speed of the vehicle at a time each of the one or more objects were detected and to determine whether the relative speed of each of the one or more detected objects is within a speed window, wherein the speed window is determined in dependence on the associated speed of the vehicle. The speed window comprises an upper speed threshold and a lower speed threshold.

In certain embodiments, the upper speed threshold is determined as a speed greater than the associated speed of the vehicle by a predetermined percentage of the associated vehicle speed, and the lower speed threshold is determined as a speed less than the associated speed of the vehicle by the predetermined percentage of the associated vehicle speed. Advantageously, the second alignment determination process can determine radar sensor alignment at a variety of vehicle speeds.

In certain embodiments, the control system is configured to determine a proportion of detections having a relative speed within the speed window compared to a total number of the one or more detections; wherein the second alignment determination process comprises determining that the radar sensor is misaligned when the determined proportion of detections having a relative speed within the speed window is less than a first predetermined proportion. Advantageously, the system can determine that the radar sensor is detecting stationary objects existing around the vehicle and determine that the radar sensor is aligned.

In certain embodiments, the total number of the one or more detections is a number of detections within a predetermined period of time. Advantageously, a rolling time period ensures the system is operational as the vehicle moves between different environments.

In certain embodiments, the control system is configured to determine a distance between the vehicle and each of the one or more detected objects; and determine a proportion of detections of objects more than a predetermined distance away from the vehicle compared to the total number of the one or more detections; wherein the second alignment determination process comprises determining that the radar sensor is misaligned when the determined proportion of detections of objects more than a predetermined distance away from the vehicle is less than a second predetermined proportion. Advantageously, the presence of objects attached to the vehicle proximal to the radar sensor do not interfere with the alignment determination processes, and the range of detection of the radar sensor is checked to be at an appropriate level for correct alignment.

In certain embodiments, the second alignment determination process comprises: determining that the radar sensor is aligned when the determined proportion of detections having a relative speed within the speed window is greater than or equal to the first predetermined proportion, and the determined proportion of detections of objects more than a predetermined distance away from the vehicle is greater than or equal to the second predetermined proportion. Advantageously, false positive determinations of the radar sensor being misaligned using the first alignment determination process are overcome.

In certain embodiments, the predetermined distance is based on the associated speed of the vehicle. Advantageously, the predetermined distance is maintained at an appropriate level despite changes in the speed of the vehicle. In certain embodiments, the predetermined distance is determined as a distance travelled by the vehicle in a predetermined time. In certain embodiments, the predetermined time is two seconds.

In certain embodiments, the control system comprises output means configured to output an indication of misalignment of the radar sensor in dependence on the second alignment determination process. Advantageously, a user is made aware of radar sensor misalignment when the control system determines that the radar sensor is misaligned.

In certain embodiments, the control system is configured to control the output means to output the indication after a predetermined time has elapsed following the determination that the radar sensor is misaligned; or update a counter based on the associated vehicle speed, and output the indication when the counter reaches a predetermined number; wherein, when it is determined according to the second alignment determination process that the radar sensor is aligned, the control system is configured to reset the counter. Advantageously, the second alignment determination process reduces the number of false positive determinations of radar misalignment which are presented to the user.

In certain embodiments, the control system is configured to determine whether the vehicle is in an off-road environment, and trigger or suspend the determination of relative speed of the detected objects, the comparison of the detected object relative speed to the associated vehicle speed, and the second alignment determination process in dependence on the determination of whether the vehicle is in the off-road environment. Advantageously, the second radar sensor alignment process may be suspended when it is known that the vehicle is in an environment where the radar sensor is unlikely to detect many objects.

In certain embodiments, the control system is configured to: determine a number of channels of the radar sensor which detect an object among a plurality of channels of the radar sensor; trigger the determination of detected object relative speed, the comparison of the detected object relative speed to the associated vehicle speed, and the second alignment determination process when the number of channels of the radar sensor which detect objects is less than a predetermined number of channels; and suspend the determination of the detected object relative speed, the comparison of the detected object relative speed to the associated vehicle speed, and the second alignment determination process when the number of channels of the radar sensor which detect objects is equal to or greater than a predetermined number of channels. Advantageously, the second alignment determination process is only invoked when the radar sensor receives relatively little data. Therefore, the second alignment determination process is not invoked when sufficient data is available for confidence in the first alignment determination process to be high. Thus, processing efficiency is improved.

In certain embodiments, the second alignment determination process is performed when the first alignment determination process determines that the radar sensor is misaligned, or when the radar data comprises insufficient detections having associated quality measurements above the threshold quality for performing the first alignment determination process. Advantageously, processing efficiency is improved by only performing the second process when necessary.

In certain embodiments, the second alignment determination process is performed at the same time as the first alignment determination process. Advantageously, when a quality factor of the alignment, or a confidence in alignment, drops due to reduced object detection, the second alignment determination process may start to increase the quality factor before it reaches zero or a threshold for determining that the radar sensor is misaligned.

According to another aspect as disclosed herein, there is provided a system comprising:
the control system of any preceding claim; and
a radar sensor arranged to provide radar data indicative of one or more detections of objects in an environment of the vehicle to the control system.

According to another aspect of the invention, there is provided a vehicle comprising the control system and a radar sensor arranged to provide radar data indicative of one or more detections of objects in an environment of the vehicle to the control system.

According to another aspect of the invention, there is provided a method for determining alignment of a radar system of a vehicle, the method comprising:
receiving radar data from the radar sensor indicative of one or more detections of objects in an environment of the vehicle;
performing a first alignment determination process to determine alignment of a field of view of the radar sensor and a longitudinal axis of the vehicle in dependence on the received radar data;
determining a relative speed with respect to the vehicle of each of the one or more detected objects;
comparing the relative speed of each of the one or more detected objects to an associated speed of the vehicle; and
performing a second alignment determination process to determine the alignment of the radar sensor in dependence on the comparison;
wherein the one or more detections of objects used for the comparison include at least one detection having an associated quality measurement of the detection, the associated quality measurement being below a threshold quality; and
wherein the at least one detection having the associated quality measurement below the threshold quality is only used for the second alignment determination process.

In certain embodiments, the received radar data may include a first signal which represents a velocity indicator for each detection. The first signal may be a "dsp.LocationData_TC.Location.i#.vMeas" signal received from a radar sensor. The received radar data may include a second signal which further includes a distance indicator for each detection. The second signal may be a "dsp.LocationData_TC.Location.i#.dMmeas" signal received from the radar sensor. The associated speed of the vehicle may be provided to the control system by being included in a signal received from a central processing unit of the vehicle. The speed of the vehicle may be determined from one or both of a navigation system or measured wheel rotations of the vehicle.

According to another aspect of the invention, there is provided computer software which, when executed by a computer, is arranged to perform the method; optionally the computer software is stored on a computer readable medium.

Within the scope of th invention as defined by the claims, it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination within the scope of the claims, unless such features are incompatible.

### BRIEF DESCRIPTION OF THE DRAWINGS

One or more embodiments of the invention will now be described, by way of example only, with reference to the accompanying drawings, in which:
Figure 1 shows a block diagram representing a system comprising a control system according to an embodiment of the invention and a radar sensor;
Figure 2 shows a representation of a vehicle according to an embodiment of the invention;
Figure 3 shows a first flow chart showing a method according to an embodiment of the invention;
Figure 4 shows a representation of radar data indicating one or more detections and respective relative speeds of the detections compared to a speed envelope around an associated speed of a vehicle; and
Figure 5 shows a second flow chart showing a method according to an embodiment of the invention.

### DETAILED DESCRIPTION

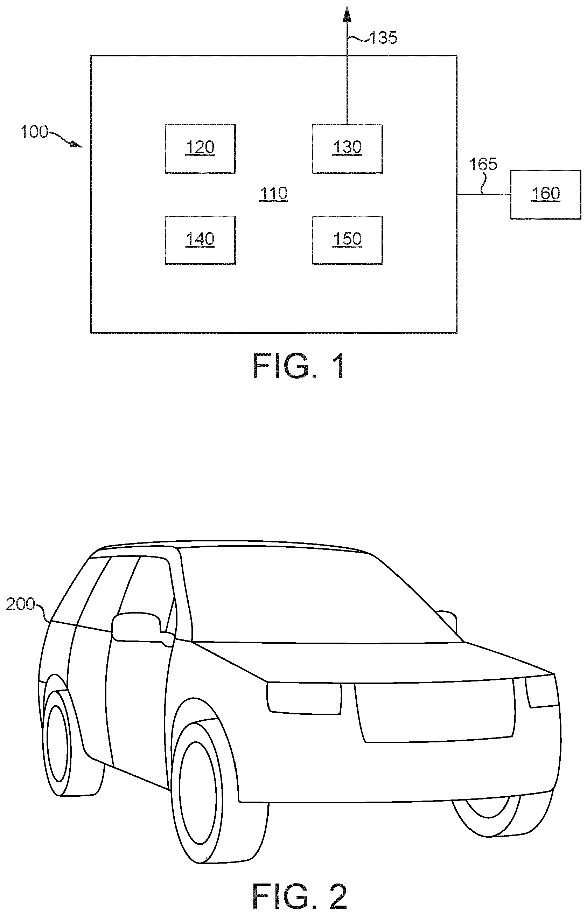

A system 100 in accordance with an embodiment of the present invention is described herein with reference to the accompanying Figure 1. Figure 1 shows a representation of the system 100 in accordance with an embodiment of the invention, where the system 100 comprises a control system 110 and a radar sensor 160.

The control system 110 of Figure 1 is shown to comprise a controller comprising processing means 120, output means 130, input means 140 and memory means 150. The processing means 120, output means 130, input means 140 and memory means 150 are communicatively coupled with one another. Although Figure 1 shows the control system 110 comprising a single controller, it should be understood that the control system 110 may comprise a plurality of controllers each comprising processing means, output means, input means and memory means.

The processing means 120 may comprise processing means which may be one or more electronic processing devices or processors which operably execute computer-readable instructions. The control system 110 further comprises an input means 140 which may be an electrical input to receive one or more electrical signals. The input means 140 may be configured to receive radar data from the radar sensor 160. The control system 110 may comprise an output means 130 which may be an electrical output 130 for outputting one or more control signals 135 under control of the processing means 120. The one or more control signals output by the output means 130 may include control signals associated with a determination of radar sensor alignment or radar sensor misalignment. For example, the output means 130 may output a control signal 135 to a communications bus of a vehicle indicative of a determination that the radar sensor 160 is misaligned. One or more further control systems or processing units communicatively coupled to the communication bus of the vehicle may control various functions of the vehicle in response to receiving the output control signal 135 from the output means 130. The output means 130 may further comprise a display or audible output means for outputting a visual or audio output to a user.

The memory means 150 may be one or more memory devices 150. The memory means 150 is electrically coupled to the processing means120. The memory means 150 is configured to store computer-readable instructions, and the processing means 120 are configured to access the memory means 150 and execute the instructions stored thereon.

The system 100 of Figure 1 further comprises the radar sensor 160. The radar sensor 160 is communicatively coupled to the control system 110 such that the radar sensor 160 provides radar data 165 to the control system 110. The radar sensor 160 may be configured to continuously scan for objects located in the environment by broadcasting electromagnetic waves and monitoring for received reflections of the broadcasted electromagnetic waves. The radar sensor 160 may receive reflected signals which indicate the presence of one or more objects in the environment of the radar sensor 160. For example, the radar sensor 160 may make use of the microwave part of the electromagnetic spectrum, such as using signals having a frequency around 77 GHz, such as within a range from 76-81 GHz, although embodiments of the present invention are not limited in the frequency of the radar sensor. That is, the skilled person would readily understand that the frequency used in such radar sensors may change over time, but still be compatible with the present disclosure. The radar sensor 160 may make use of known physical phenomena including Doppler effect to determine properties such as the speed of detected objects relative to the radar sensor 160. That is, the radar sensor 160 may detect an object by recognising a reflected radar signal, and determine properties about the detected object by processing the properties of the received signal. The radar sensor 160 may be configured to continually scan its field of view to monitor for the presence of objects. The field of view of the radar sensor 160 is a maximum area that the radar sensor 160 can receive signals from and has lateral and vertical extent. The radar sensor 160 may be provided having a number of different channels, such that the radar sensor 160 is capable of detecting a plurality of objects across the field of view of the radar sensor 160.

The radar sensor 160 of Figure 1 is configured to provide radar data 165 indicative of one or more detections of objects to the control system 110. In embodiments of the invention, the control system 110 is configured to process the received radar data to determine alignment of the radar sensor 160, as is discussed in more detail below. The control system 110 is arranged in embodiments of the invention to perform a number of processing operations on the received radar data to determine whether the radar sensor 160 is aligned correctly. In particular, the control system 110 is configured to determine whether a field of view of the radar sensor 160 is aligned with respect to a longitudinal axis of a vehicle. That is, the radar sensor 160 may be determined to be aligned when the field of view of the radar sensor 160 has good correspondence to an intended field of view of the radar sensor 160 in use. In some examples, the intended field of view of the radar sensor 160 may be a generally forward facing direction with respect to a vehicle and may be generally centred around an axis through the vehicle. The control system 110 may determine alignment of the radar sensor 160 using a combination of a first alignment determination process and a second alignment determination process.

In some embodiments, the control system 110 of Figure 1 may be configured to control one or more functions of a vehicle based on radar data received from the radar sensor 160. For example, the control system 110 may be configured to provide autonomous driving functions or safety functions including automatic braking or collision warning for the vehicle. In other embodiments, the one or more functions may be provided by another control system (not shown) to which the control system 110 provides an output 135. To continue this example, the control system 110 may be configured to output control signals 135 which may cause a central processing unit of a vehicle to activate automatic braking functions in a vehicle when the radar sensor 160 provides radar data indicating that a rapidly approaching object is present in front of the vehicle.

The control system 110 of Figure 1 may be configured to determine alignment of the radar sensor 160. The control system 110 may determine that the radar sensor 160 is not correctly aligned i.e. is misaligned when the radar data received from the radar sensor 160 indicates that insufficient i.e. too few objects are detected in a predetermined period of time. For example, the radar sensor 160 may be determined as misaligned when the radar sensor 160 does not detect sufficient detections having a high quality of objects during a predetermined time period. As will be discussed, a quality score may be determined for detections based on a number of possible factors, including received signal strength of reflected radar signals received by the radar sensor 160. For example, detections having a high quality may be detections which have a received signal strength above a threshold signal strength. The determination of the radar sensor 160 being misaligned may include a process of accruing points on a counter based on a vehicle speed. The control system 110 is further configured to receive and store information relating to properties of the vehicle, including the vehicle speed. The control system 110 may receive information on a travelling speed of a vehicle from another processor of the vehicle using the input means 140.

Figure 2 shows a representation of a vehicle 200 according to an embodiment of the invention. The vehicle 200 may comprise the system 100 including the control system 110 and the radar sensor 160 of Figure 1. The radar sensor 160 may be provided at the front of the vehicle such that the radar sensor 160 has a field of view substantially corresponding to the area in front of the vehicle 200, particularly aligned with a horizontal plane of the vehicle. As such, the radar sensor 160 may be provided to monitor the area in front of the vehicle 200 to detect objects in the environment of the vehicle 200. Alternatively, the radar sensor 160 may be provided to have a field of view facing outwards in any direction from the vehicle 200. The vehicle 200 may comprise multiple radar sensors 160 arranged in different respective directions.

Objects detectable by the radar sensor 160 may be man-made or natural objects. For example, in the typical environment of the vehicle 200 in use driving on a typical road, the radar sensor 160 may detect objects including stationary objects and moving objects. The stationary objects may include objects such as parked vehicles, road signs, streetlights and trees, while the moving objects may include other moving vehicles or pedestrians.

As discussed above, the radar sensor 160 may collect information including information related to the power of reflected signals, or a received signal strength indicator. The power of the reflected signal may be considered to indicate a quality of the detection. For example, a received signal having a high power may correspond to a detection of, without limitation, a large solid object such as a road sign or parked vehicle, while a received signal having a low power may correspond to a detection of a less solid or smaller object such as, without limitation, a small plant or animal at the side of the road. The power level of a received signal may be used by the radar sensor 160 or the control system 110 to infer a quality measurement of the detection and thereby determine whether the received signal should be used for certain functions or processes. For example, only high quality detections may be used to control automated functions of the vehicle 200, and low quality detections may not be used by the vehicle 200 for these purposes. The radar sensor 160 or the control system 110 may derive a quality measurement of detections of objects using alternative signal properties. In some examples, the radar sensor 160 or the control system 110 may determine a quality of radar detections over a period of time. High quality detections may be detections having a quality measurement above a threshold quality value, and low quality detections may be detections having a quality measurement below the threshold quality value.

The vehicle 200 may be an automotive i.e. land-going vehicle, such as a wheeled vehicle i.e. passenger vehicle or a goods vehicle. The vehicle 200 may be configured with functions including autonomous driving and automated safety functions such as those discussed above. For example, the vehicle 200 may be equipped with necessary components to perform automatic braking when the control system 110 in combination with the radar sensor 160 determine that a detected object is rapidly approaching the vehicle 200.

The vehicle 200 may be configured to output information to a user of the vehicle 200. For example, the vehicle 200 may comprise a display or warning lights which may inform the user of errors or warnings determined by the vehicle 200. For example, the vehicle 200 may output an indication to the user if it is determined that the radar sensor 160 is not correctly aligned. The alignment of the radar sensor 160 may refer to an alignment of a field of view of the radar sensor 160 with a longitudinal axis of the vehicle 200.

The control system 110 of the vehicle 200 is further configured to monitor properties of the vehicle 200. For example, the control system 110 may detect and monitor the speed of the vehicle 200, and the orientation of the vehicle 200 with respect to gravity to determine whether the vehicle 200 is on a surface having a particular gradient such as a steep slope, which may indicate that the vehicle 200 is in an off-road environment. An environment may be determined or referred to as an off-road environment based on characteristics of the environment. The off-road environment may be where a navigable path is not formed by a metalled road surface i.e. the navigable path has a natural surface. For example, an off-road environment may include a desert or beach, where no road is present and where few objects exist around the vehicle 200. Alternatively, the off-road environment may include any area with no road, or with poor quality or dirt roads. The off-road environment may also include particularly steep inclines, and as such be detectable by the vehicle 200 using information about the orientation of the vehicle 200. The off-road environment is not limited to the aforementioned examples, but should be understood to mean any environment where few objects detectable by a radar sensor exist. In some examples, and as discussed above, the control system 110 may receive signals from other processors of the vehicle which include information relating to the vehicle 200 speed and orientation using the input means 140. The control system 110 may process the received signals and extract the information relating to the vehicle 200 speed and orientation.

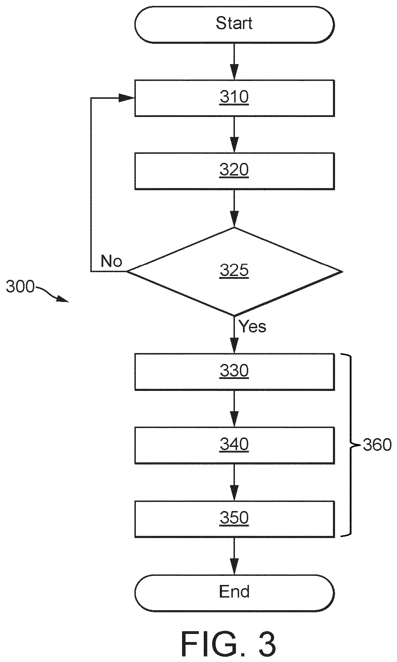

Figure 3 is a flowchart illustrating a method 300 for determining alignment of a radar sensor according to an embodiment of the invention. The method of Figure 3 may be performed by the control system 110 of Figure 1 in use in the vehicle 200 of Figure 2. The memory means 150 may stored instructions thereon which when executed by the one or more controllers 120 cause the control system 110 to execute the method 300 of Figure 3.

In block 310 radar data is received 310 from the radar sensor 160. The radar data comprises information indicating detections of one or more objects in the field of view of the radar sensor 160. For example, the radar data may include, for each detection, an identification value to identify each of the detections and one or more of information regarding the power level of the received signal, the distance between the radar sensor 160 and the detected object, the speed of the detected object, and other information related to the detected object. Alternatively, the radar sensor 160 may not calculate the speed of the detected object, and the speed of the detected object may be determined by the control system 110 based on monitoring the distance of a detected object using a plurality of detections of the same object over a period of time. The radar data may indicate a channel of the radar sensor 160 which receives the signal indicative of each detection, and may indicate a total number of channels of the radar sensor 160. The radar data may be received from the radar sensor 160 continuously over a period of time.

At block 320, the control system 110 performs a first alignment determination. The control system 110 performs the first alignment determination to determine whether the field of view of the radar sensor 160 is aligned with a longitudinal axis of the vehicle 200. The first alignment determination process may be a radar alignment process which uses only high quality detections to determine alignment of the radar sensor 160. For example, the first alignment determination process may include determining a quality score based on a number of detections of objects over a period of time. When the quality score reaches a predetermined threshold, the radar sensor 160 may be determined as misaligned. Alternatively, when the quality score reaches the predetermined threshold, the control system 110 may begin adjusting a point counter. The rate of adjustment of the point counter may be based on the speed of the vehicle 200. For example, the point counter may be adjusted more quickly when the vehicle 200 has a higher speed. The radar sensor 160 may be determined to be misaligned when the point counter reaches a predetermined threshold. Optionally, the point counter may be reset if the system 100 identifies an object before the predetermined threshold is reached.

The first alignment determination process may be performed using only high quality detections of objects. High quality detections of objects may be determined as objects which have a quality measurement above a predetermined threshold quality. The quality measurement may be determined based on a power level of the received signals included in the radar data. For example, high quality detections of objects may be identified in the radar data as detections of objects which have a signal power greater than a threshold power. The first alignment determination process may use a limited range of detected objects to reduce processing power.

At block 325, the method comprises determining whether to perform a second alignment determination process 360. If it is determined to perform the second alignment determination process 360, the method continues to block 330. If it is determined not to perform the second alignment determination process 360, the method returns to block 310. As is discussed below, the second alignment determination process 360 may be selectively performed. The second alignment determination process 360 may be performed in dependence on the first alignment determination process or if the control system 110 does not have sufficient high quality data to perform the first alignment determination process.

At block 330, the control system 110 determines a relative speed of each detected object. The relative speed of each detected object may be a speed relative to the speed of the vehicle 200. For example, a stationary object may be determined to have a relative speed which is the inverse of the vehicle 200 speed. A moving object moving at the same speed in the same direction as the vehicle 200 would be determined to have a relative speed of zero. The relative speed of each detected object may be determined using known techniques for determining speed of objects detected using a radar sensor 160, such as by considering reflected signal properties or Doppler effect.

At block 340, the control system 110 compares the determined relative speed of each detected object to the associated speed of the vehicle 200. The associated speed of the vehicle 200 is the speed of the vehicle 200 at the time when the object was detected. In some embodiments, the comparison comprises comparing the relative speed of each detected object to the associated speed of the vehicle 200, and determining whether the relative speed of each detected object is substantially similar to the associated speed of the vehicle 200. The comparison may include determining whether the inverse of the relative speed of each detected object is substantially similar to the associated speed of the vehicle 200. For example, a stationary object detected by the radar sensor 160 would have a relative speed close to the inverse of the associated speed of the vehicle 200. Such a detection would be considered substantially similar to the associated speed of the vehicle 200.

In some embodiments, the relative speed of each detected object is substantially similar to the associated speed of the vehicle 200 when the relative speed of each detected object is within a predetermined range around the associated speed of the vehicle 200. The predetermined range around the associated speed of the vehicle 200 may include an upper threshold and a lower threshold, which may respectively be determined by adding to and subtracting from the associated vehicle speed a predetermined amount. The predetermined amount may be a predetermined value, such as 5 miles per hour, or may be based on the associated vehicle speed, such as 5% of the associated vehicle speed. The upper and lower thresholds may together form a speed window or an envelope around the associated speed of the vehicle 200.

The comparison 340 of the determined relative speed of each detected object to the associated speed of the vehicle 200 may comprise determining the associated speed of the vehicle 200 as a speed of the vehicle 200 at a time each of the one or more objects were detected, and determining whether the relative speed of each of the one or more detected objects is within the speed window.

The method 300 of Figure 3 includes performing at block 350 a second alignment determination. The second alignment determination comprises determining alignment of the radar sensor 160 in dependence on the comparison 340 of the relative speed of each detected object to the associated speed of the vehicle 200. The determination of the relative speed of each detected object, the comparison of the determined relative speeds to the associated vehicle speed and the second alignment determination may together be considered to form a second alignment determination process 360. For example, the second alignment determination process 360 may comprise determining whether a proportion of detected objects have a speed within the speed window existing around the associated speed of the vehicle 200. The proportion may be 50% in some examples. The second alignment determination process 360 may include determining that the radar sensor 160 is aligned when more than the proportion of detected objects have respective relative speeds within the speed window around the associated speed of the vehicle 200.

In this case, objects having a relative speed within the speed window around the associated speed of the vehicle 200 are likely to be detected stationary objects. The determination that a proportion of detections of objects by the radar sensor 160 have a relative speed similar to the associated speed of the vehicle 200 indicates that the radar sensor 160 is detecting a number of stationary objects in the environment of the vehicle 200. Thus, the radar sensor 160 is determined to be aligned. The second alignment determination process 360 may therefore make use of all detections by the radar sensor 160, unlike the first alignment determination process, which may only use detections having at least a predetermined quality measurement.

The second alignment determination process 360 may further comprise determining whether the detected objects are within a predetermined distance from the vehicle 200. The predetermined distance may be based on the speed of the vehicle 200. For example, the predetermined distance may be determined as a distance travelled by the vehicle 200 in a predetermined amount of time, such as 2 seconds. The predetermined amount of time may vary. For example, the predetermined amount of time may range from 1 second to 5 seconds. The predetermined amount of time may be dependent on the environment of the vehicle 200 or information about the user. For example, the predetermined period of time may be longer when the vehicle 200 is in an off-road environment. The determination of whether the detected objects are within the predetermined distance from the vehicle 200 may be included as an additional step in the second alignment determination process 360 to determine whether the radar sensor 160 is aligned. For example, if a proportion of detected objects are below a threshold distance from the vehicle 200, then the detections may indicate objects attached to the vehicle 200 rather than objects existing in the environment of the vehicle 200, such as objects at the side of a road. Therefore, the second alignment determination process 360 may further comprise a step of determining whether the proportion of detections having a respective relative speed substantially similar to the associated speed of the vehicle 200 include a proportion of detections having a distance from the vehicle 200 greater than a predetermined distance. The second alignment determination process 360 may comprise determining that the radar sensor 160 is aligned when there is a proportion of detections having a distance from the vehicle 200 greater than a predetermined distance greater than a predetermined proportion, and a proportion of detected objects having a relative speed substantially similar to the associated speed of the vehicle 200.

The second alignment determination process 360 of Figure 3 is used to confirm or validate the result of the first alignment determination process. As discussed above, the first alignment determination process may be based on high quality detections having a quality measurement above a threshold quality. The second alignment determination process 360 may be performed using all detections indicative of objects. The second alignment determination process 360 is suitable for determining that even low quality detections are valid detections of objects by considering the relative speed of the detected objects compared to the associated speed of the vehicle 200, and optionally by considering the distance of the detected objects from the vehicle 200. This is particularly advantageous in environments where few high quality detections are available, such as roads with low amounts of large objects at the side of the road.

The second alignment determination process 360 may be used to confirm or validate the determination of alignment from the first alignment determination process. For example, the first alignment determination process may determine that the radar sensor 160 is misaligned if few high quality detections are detected by the radar sensor 160. However, the second alignment determination process 360 may make use of all detections including low quality detections, and determine that the radar sensor 160 is in fact detecting valid objects in the environment of the vehicle 200, and thus that the radar sensor 160 is correctly aligned. The second alignment determination process 360 may therefore overwrite the output of the first alignment determination process. The second alignment determination process 360 may therefore optionally include suppressing error messages or warnings that the radar sensor 160 is misaligned triggered by the first alignment determination process. The second alignment determination process 360 may reset a timer or point counter triggered by the first alignment determination process if the second alignment determination process 360 determines that the radar sensor 160 is aligned.

The method 300 may optionally further comprise outputting a warning or message to a user that the radar sensor 160 is misaligned if the second alignment determination process 360 determines that the radar sensor 160 is misaligned. Optionally, this may be output after expiry of a timer or reaching of a threshold count by a point counter triggered by the determination by the second alignment determination process 360 that the radar sensor 160 is misaligned. The timer or point counter may optionally be reset if either the first or second alignment determination processes 360 subsequently determine that the radar sensor 160 is aligned. The determination 330 of relative speed of each detected object, the comparison 340 of the respective relative speeds of each detected object to the associated speed of the vehicle 200 and the performing 350 of the second alignment determination process 360 may be selectively performed in dependence on the first alignment determination process. In some examples, the determination 330 of relative speed of each detected object, the comparison 340 of the respective relative speeds of each detected object to the associated speed of the vehicle 200 and the performing 350 of the second alignment determination process 360 are performed only when the first alignment determination process determines that the radar sensor 160 is misaligned.

Alternatively or in addition, the determination 330 of relative speed of each detected object, the comparison 340 of the respective relative speeds of each detected object to the associated speed of the vehicle 200 and the performing 350 of the second alignment determination process 360 may be performed if the radar sensor 160 does not provide sufficient detections having a high enough quality to perform the first radar alignment determination process. For example, the determination 330 of relative speed of each detected object, the comparison 340 of the respective relative speeds of each detected object to the associated speed of the vehicle 200 and the performing 350 of the second alignment determination process 360 may be performed if the radar data received from the radar sensor 160 includes detections on a number of channels of the radar sensor 160 below a predetermined number of channels. That is, the second alignment determination process 360 may be invoked only if the radar sensor 160 is detecting objects with a low enough proportion of channels of the radar sensor 160. The second alignment determination process 360 may be suppressed if the radar sensor 160 is detecting objects on a sufficiently high enough proportion of the plurality of channels of the radar sensor 160.

The method 300 of Figure 3 may be suppressed if it is determined that the vehicle 200 is in an off-road environment. Such determination may be based on a gradient of the surface on which the vehicle 200 is situated. Otherwise, the method 300 of Figure 3 may be performed continuously by the vehicle 200 over time.

Advantageously, the second alignment determination process 360 enables a determination of radar sensor 160 alignment to be improved. For example, the second alignment determination process 360 can be performed when insufficient high quality detections are available for performing the first alignment determination process. Thus, alignment of the radar sensor 160 can be checked even in environments where few objects are present. This may include quiet roads, beaches, or other environments with few large or metallic objects which typically produce high quality detections. Thus, false positive determinations of the radar sensor 160 being misaligned can be reduced.

In addition, the second alignment determination process 360 can improve the confidence of a determination that the radar sensor 160 is misaligned, by performing a second check using a larger amount of radar data. That is, if both the first and second alignment determination processes 360 determine that the radar sensor 160 is misaligned, the confidence in such a determination is higher than using a single process alone.

Further, the use of the second alignment determination process 360 can be combined with a reduction in a time or counter threshold for triggering error messages or disabling functions of the vehicle, which may be triggered as a result of determining that the radar sensor 160 is misaligned and discussed above. For example, because the second alignment determination process 360 can validate or check the determination of misalignment by the first radar alignment determination process, the time allowed for detecting a new object to reset a timer or counter can be reduced. Thereby, the time taken for the system to determine that the radar sensor 160 is misaligned is reduced in cases of valid misalignment, and the vehicle 200 is able to react more quickly to a valid misalignment of the radar sensor 160.

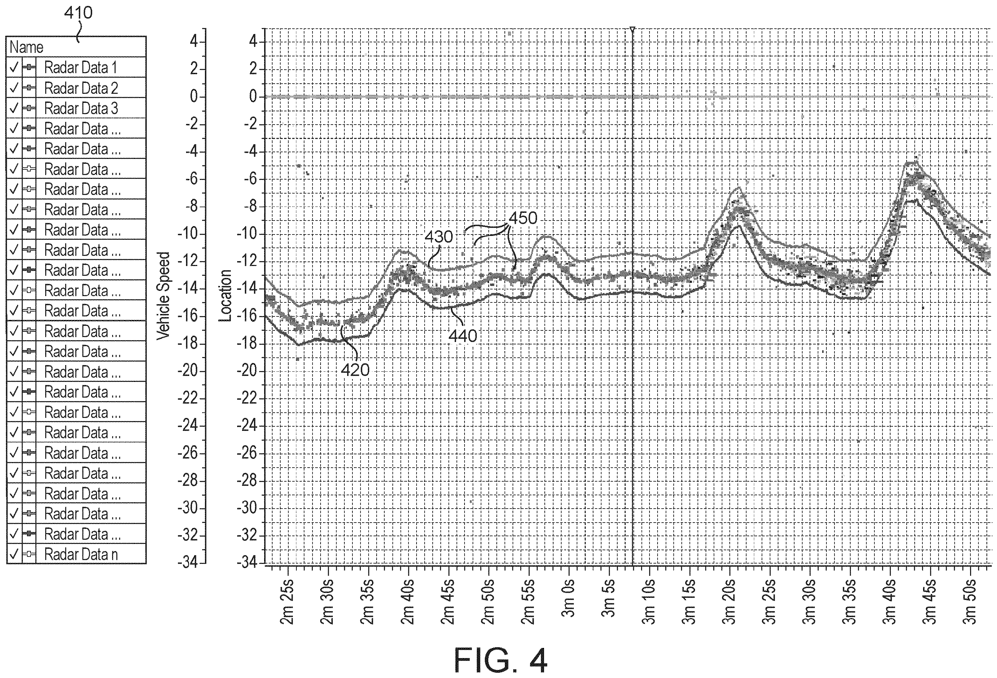

Figure 4 represents an example of radar data received from the radar sensor 160 and a speed window according to an embodiment of the invention. The radar data 410 of Figure 4 comprises information on radar detections for each of a plurality of channels of the radar sensor 160, said information indicating, for each detection, a channel of the radar sensor 160 on which the detection was made, and a relative speed of the detected object indicated by the detection. Alternatively, the radar data 410 may include only distance information, signal property information, or other information related to the received radar signal by the radar sensor 160, and the control system 110 may be configured to process the received radar data to determine the respective speed of each detected object.

Figure 4 also shows a graph showing the determined relative speed of detected objects 450 plotted over time. For each detected object 450, a relative speed may be calculated as explained in Figure 3, and the respective speed of each detected object 450 may be plotted on a graph over time. In addition, the speed 420 of the vehicle 200 may be plotted on the same graph over time. A speed window including an upper threshold 430 and a lower threshold 440 may also be plotted on the same graph. The upper threshold 430 and the lower threshold 440 may be determined as explained above, by respectively adding to and subtracting from the speed 420 of the vehicle 200. The addition and subtraction may be based on a percentage of the vehicle 200 speed 420, such that the speed window is larger at higher vehicle speeds. Alternatively, the speed window may be determined using a static amount, such that the upper threshold 430 and the lower threshold 440 are always set to a predetermined amount from the speed 420 of the vehicle 200.

Figure 4 shows an example situation in which a large proportion of detected objects 450 have relative speeds within the speed window around the speed 420 of the vehicle 200, as a large proportion of the relative speeds fall below the upper threshold 430 and above the lower threshold 440, as the thresholds 430 440 change over time with the associated speed 420 of the vehicle 200. In the case of Figure 4, the second alignment determination process may determine that the radar sensor 160 is aligned, even if the radar data 410 includes only detections having a low quality measurement, because a significant proportion of detected objects 450 have a substantially similar relative speed to the speed 420 of the vehicle 200, and thus are valid detections of stationary objects existing around the vehicle 200.

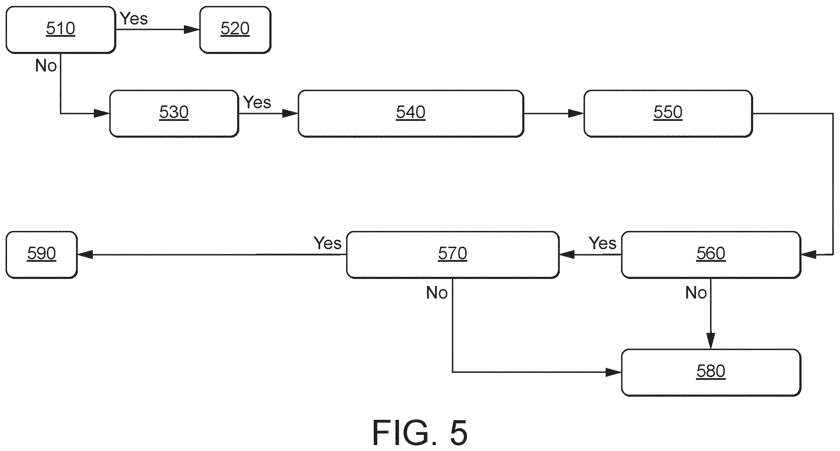

Figure 5 is a flowchart showing a method according to an embodiment of the invention. Although not shown in Figure 5, the method may include receiving radar data from a radar sensor 160 in a vehicle 200. The method of Figure 5 comprises determining at block 510 if the vehicle 200 is in an off-road environment. If the vehicle 200 is determined to be in an off-road environment, the method includes suppressing at block 520 warning or error logs being recorded based on the determination of a mis-aligned radar sensor 160. That is, if the vehicle 200 is determined to be in an off-road environment, the method includes suppressing diagnostic code such that error messages are not stored in an error log of the vehicle 200. This may be known as suppressing a Diagnostic Trouble Code (DTC) system. The DTC system may be used to record in a log of the vehicle 200 diagnostic trouble codes to aid diagnostics of the vehicle, where the diagnostic trouble codes indicate detections of various states of the vehicle 200. If a point based counter, such as those previously discussed to be triggered by a determination that the radar sensor 160 is misaligned, is already running, the point counter may be frozen in response to the determination that the vehicle 200 is in an off-road environment.

If the vehicle 200 is not determined to be in an off-road environment, the method includes determining at block 530 whether a quality score is less than a threshold quality. The quality score in some embodiments may be a DSP quality score. The DSP quality score may be based on a received power of radar detections, but may substituted for any quality measurement. The threshold quality may be 0.9, but this is an example only. The determination 530 of whether the quality score is less than a threshold quality may be replaced by the first alignment determination process of Figure 3.

If the quality score is less than the predetermined threshold quality, the method includes counting at block 540 the number of non-zero detections of objects in the received radar data. In this example, non-zero detections means data points in the radar data which have a signal power greater than zero, and thus indicate some received radar signal which has been reflected from an object. Thus, the non-zero detections are indicative of objects. The quality score may be low if few detections are recorded, or if detections recorded by the radar sensor 160 have a low quality. A low quality score may be indicative of a misaligned radar sensor 160 according to typical alignment determination processes. The counting performed at block 540 may be based on a signal received from a radar sensor which includes information on a velocity indicator for each detection.

The method of Figure 5 further comprises determining at block 550 a number of the detected objects which have a speed within a range of the vehicle speed. The method further comprises determining whether a ratio of detected objects having a speed within the range of the vehicle speed relative to the total number of counted detections of objects is greater than a predetermined proportion. In some examples, this may be 0.5, or 50%. However, this is an example only. Block 550 may further include receiving a signal indicating the speed of the vehicle. The received signal indicating the speed of the vehicle may be received from a central processing bus of the vehicle 200.

If the determined ratio is greater than the threshold, the method includes determining at block 570 if a proportion of the detected objects are greater than a predetermined distance from the vehicle 200. As explained above, if the detected objects are largely close to the vehicle 200, this may be indicative of an object attached to the vehicle 200 rather than valid detections of objects existing in the environment of the vehicle 200. The predetermined distance may be determined based on the speed of the vehicle 200. For example, the predetermined distance may be determined as the distance travelled by the vehicle 200 in a predetermined amount of time, such as two seconds. The determining performed at block 570 may be based on a signal received from a radar sensor which includes information on a velocity indicator for each detection. The determining performed at block 570 may further be based on a signal received from a radar sensor which includes information on a distance indicator for each detection. The determination at block 570 may comprise using said received signals to determine whether the distance indicator for each detection is greater than a multiple of the corresponding velocity indicator for each detection. That is, for each detection, it may be determined whether the detected object is more than a threshold distance from the vehicle at the time of the detection, where the threshold distance is determined based on the relative velocity of the detected object at the time of the detection. Alternatively, the threshold distance may be determined based on the associated speed of the associated speed of the vehicle 200 at the time of the detection. Block 570 may then further comprise determining if a proportion of the detected objects are greater than the threshold distance from the vehicle. For example, the proportion may be 0.5, or 50%. However, this is merely an example, and the proportion may be configured to be a different value.

The distance and velocity indicators may refer to a longitudinal distance and velocity in the case of a radar sensor 160 which is provided at the front of a vehicle 200. In some examples, the radar sensor 160 may be provided on a corner of the vehicle 200, and thus have a field of view which is at an angle with respect to a longitudinal axis of the vehicle 200. In this case, the information used for the method of Figure 5 is the longitudinal component of the distance and velocity indicators, not the lateral component.

If the ratio determined at block 560 of detected objects having a speed within the range of the vehicle speed relative to the total number of counted detections of objects is less than the predetermined proportion then a point based counter is adjusted at block 580. In addition, if the determined 560 ratio of detected objects having a speed within the range of the vehicle speed relative to the total number of counted detections of objects is greater than the predetermined proportion, but the proportion of the detected objects are less than the predetermined distance from the vehicle 200, then the method also includes adjusting at block 580 the points based counter. Although not shown in Figure 5, when the points based counter reaches a predetermined threshold, the radar system 160 is determined as misaligned and associated error messages may be recorded and optionally output to a user. The point based counter of Figure 5 may be replaced by an alternative, such as a timer. However, if the conditions of Figure 5 to increment the point based counter are satisfied, the method includes determining that it is likely that the radar sensor 160 is misaligned.

If the proportion of the detected objects are greater than the predetermined distance from the vehicle 200, the method includes resetting at block 590 the point counter. In this case, the vehicle 200 determines that it is likely that the radar sensor 160 is aligned correctly, and the counter is reset to avoid a false positive determination of the radar sensor 160 being misaligned from being recorded.

The proportions and ratios discussed above may be based on a rolling time window. That is, the calculation of a ratio of a first number to a second number may be based on the values of the first and second numbers in the most recent predetermined time window, such as in the most recent 5 minutes.

Advantageously, embodiments of the invention discussed above achieve an improvement in radar alignment determination, as a larger amount of radar data unsuitable for conventional approaches can be used to perform a secondary alignment determination process to confirm or validate the determination made by a first alignment determination process. The first alignment determination process may be a typical alignment determination process which only uses high quality radar data to determine alignment of the radar sensor 160. The second alignment determination process may make use of all radar data by considering relative speed of detected objects to identify detections of valid stationary objects in the environment of the vehicle 200. The second alignment determination process may determine that the radar sensor 160 is aligned if sufficient valid stationary objects are determined a sufficient distance from the vehicle 200, and thus may correct an erroneous determination of radar misalignment by the first process. Thereby, false positive determinations of misalignment are reduced. The invention is particularly suitable for reducing false positive determinations of misaligned when the vehicle 200 is in an environment with few objects, or with few objects which produce high quality detections, such as environments without street signs.

Optionally, the second alignment determination process may be selectively performed. For example, the second alignment determination process may be performed only when the first alignment determination process determines that the radar sensor 160 is misaligned, or when insufficient high quality data is available to perform the first alignment determination process. Therefore, efficient processing is achieved as the second alignment determination process is only performed when necessary, and the first alignment determination process may be operated in conditions where sufficient high quality radar data is available.

Optionally, a traditional point counting logic may be used as part of the method of the invention, to allow a delay before determining that a radar sensor is misaligned and to reduce false positives of misalignment. Advantageously, a threshold used in such a system may be reduced in the present invention, as use of the second alignment determination process means that less time is required to identify valid stationary objects to determine that the radar sensor 160 is aligned because a greater amount of radar data is used for the second alignment determination process. Thereby, in the case of genuine radar sensor 160 misalignment, the time taken to identify the misalignment is reduced.

It will be appreciated that various changes and modifications can be made to the present invention without departing from the scope of the appended claims.

## Claims

1. A control system (110) for use with a vehicle (200) having a radar sensor (160), the control system comprising one or more controller (120), the control system being configured to:
receive (310) radar data from the radar sensor (160) indicative of one or more detections of objects in an environment of the vehicle (200);
perform (320) a first alignment determination process to determine alignment of a field of view of the radar sensor (160) and a longitudinal axis of the vehicle (200) in dependence on the received radar data;
determine (330) a relative speed with respect to the vehicle (200) of each of the one or more detected objects;
compare (340) the relative speed of each of the one or more detected objects to an associated speed of the vehicle (200); and **characterised in that** the control system being further configured to
perform (350) a second alignment determination process to determine the alignment of the radar sensor (160) in dependence on the comparison;
wherein the one or more detections of objects used for the comparison include at least one detection having an associated quality measurement of the detection, the associated quality measurement being below a threshold quality; and
wherein the at least one detection having the associated quality measurement below the threshold quality is only used for the second alignment determination process.

2. The control system of claim 1, wherein the second alignment determination process comprises determining that the radar sensor is aligned when at least a proportion of the one or more detected objects have respective relative speeds substantially similar to the associated speed of the vehicle (200).

3. The control system of claim 1 or 2, wherein, to compare the relative speed of each of the one or more detected objects to the associated speed of the vehicle, the control system is configured to:
determine the associated speed of the vehicle (200) as a speed of the vehicle at a time each of the one or more objects were detected; and
determine whether the relative speed of each of the one or more detected objects is within a speed window, wherein the speed window is determined in dependence on the associated speed of the vehicle (200).

4. The control system of claim 3, wherein the control system is configured to:
determine a proportion of detections having a relative speed within the speed window compared to a total number of the one or more detections;
wherein the second alignment determination process comprises determining that the radar sensor (160) is misaligned when the determined proportion of detections having a relative speed within the speed window is less than a first predetermined proportion.

5. The control system of claim 4, wherein the second alignment determination process comprises determining that the radar sensor (160) is aligned when the determined proportion of detections having a relative speed within the speed window is greater than or equal to the first predetermined proportion.

6. The control system of any of claims 1 to 4, wherein the control system is configured to:
determine a distance between the vehicle (200) and each of the one or more detected objects; and
determine a proportion of detections of objects more than a predetermined distance away from the vehicle (200) compared to the total number of the one or more detections;
wherein the second alignment determination process comprises determining that the radar sensor (160) is misaligned when the determined proportion of detections of objects more than a predetermined distance away from the vehicle (200) is less than a second predetermined proportion.

7. The control system of claim 6 dependent on claim 4, wherein the second alignment determination process comprises:
determining that the radar sensor (160) is aligned when the determined proportion of detections having a relative speed within the speed window is greater than or equal to the first predetermined proportion, and the determined proportion of detections of objects more than a predetermined distance away from the vehicle (200) is greater than or equal to the second predetermined proportion.

8. The control system of claim 6 or claim 7, wherein the predetermined distance is based on the associated speed of the vehicle (200), and optionally, wherein the predetermined distance is determined as a distance travelled by the vehicle (200) at the associated speed of the vehicle in a predetermined time.

9. The control system of any preceding claim, wherein the control system comprises output means (130) configured to output an indication of misalignment of the radar sensor (160) in dependence on the second alignment determination process, and optionally, wherein the control system is configured to:
control the output means (130) to output the indication after a predetermined time has elapsed following the determination that the radar sensor (160) is misaligned; or
update a counter based on the associated vehicle speed, and output the indication when the counter reaches a predetermined number;
wherein, when it is determined according to the second alignment determination process that the radar sensor (160) is aligned, the control system is configured to reset the counter.

10. The control system of any preceding claim, wherein the control system is configured to:
determine whether the vehicle (200) is in an off-road environment;
trigger the determination of relative speed of the detected objects, the comparison of the detected object relative speed to the associated vehicle speed, and the second alignment determination process when it is determined that the vehicle (200) is not in the off-road environment; and
suspend the determination of detected object relative speed, the comparison of the detected object relative speed to the associated vehicle speed, and the second alignment determination process when it is determined that the vehicle (200) is in the off-road environment, and optionally,
wherein the control system is configured to determine a gradient of the ground in a current location of the vehicle (200), and to determine that the vehicle is in the off-road environment when the determined gradient is greater than a predetermined threshold gradient.

11. The control system of any preceding claim, wherein the control system is configured to:
determine a number of channels of the radar sensor (160) which detect an object among a plurality of channels of the radar sensor (160);
trigger the determination of detected object relative speed, the comparison of the detected object relative speed to the associated vehicle speed, and the second alignment determination process when the number of channels of the radar sensor (160) which detect objects is less than a predetermined number of channels; and
suspend the determination of the detected object relative speed, the comparison of the detected object relative speed to the associated vehicle speed, and the second alignment determination process when the number of channels of the radar sensor (160) which detect objects is equal to or greater than a predetermined number of channels, and optionally,
wherein the predetermined number of channels is based on a ratio of a number of the plurality of channels of the radar sensor (160).

12. The control system of any preceding claim, wherein the second alignment determination process is performed when the first alignment determination process determines that the radar sensor (160) is misaligned, or when the radar data comprises insufficient detections having associated quality measurements above the threshold quality for performing the first alignment determination process.

13. A vehicle (200) comprising the control system (110) according to any one of the preceding claims, and a radar sensor (160) arranged to provide radar data indicative of one or more detections of objects in an environment of the vehicle (200) to the control system (110).

14. A method (300) for determining alignment of a radar sensor (160) of a vehicle (200), the method comprising:
receiving (310) radar data from the radar sensor (160) indicative of one or more detections of objects in an environment of the vehicle (200);
performing (320) a first alignment determination process to determine alignment of a field of view of the radar sensor (160) and a longitudinal axis of the vehicle (200) in dependence on the received radar data;
determining (330) a relative speed with respect to the vehicle (200) of each of the one or more detected objects;
comparing (340) the relative speed of each of the one or more detected objects to an associated speed of the vehicle (200); and **characterised in that** the method further comprises
performing (350) a second alignment determination process to determine the alignment of the radar sensor (160) in dependence on the comparison;
wherein the one or more detections of objects used for the comparison include at least one detection having an associated quality measurement of the detection, the associated quality measurement being below a threshold quality; and
wherein the at least one detection having the associated quality measurement below the threshold quality is only used for the second alignment determination process.

15. Computer software which, when executed by a computer, is arranged to perform a method according to claim 14; optionally the computer software being stored on a computer readable medium.

## Patentansprüche

1. Steuersystem (110) zur Verwendung mit einem Fahrzeug (200), das einen Radarsensor (160) aufweist, das Steuersystem umfassend eine oder mehrere Steuerungen (120), wobei das Steuersystem konfiguriert ist, um:
Radardaten vom Radarsensor (160) zu empfangen (310), die eine oder mehrere Erfassungen von Gegenständen in der Umgebung des Fahrzeugs (200) anzeigen;
einen ersten Ausrichtungsbestimmungsprozess durchzuführen (320), um die Ausrichtung eines Sichtfelds des Radarsensors (160) und einer Längsachse des Fahrzeugs (200) in Abhängigkeit von den empfangenen Radardaten zu bestimmen;
eine Relativgeschwindigkeit jedes der einen oder mehreren erfassten Gegenstände in Bezug auf das Fahrzeug (200) zu bestimmen (330);
die Relativgeschwindigkeit jedes der einen oder mehreren erfassten Gegenstände mit einer zugehörigen Geschwindigkeit des Fahrzeugs (200) zu vergleichen (340); und **dadurch gekennzeichnet, dass** das Steuersystem ferner konfiguriert ist, um
einen zweiten Ausrichtungsbestimmungsprozess durchzuführen (350), um die Ausrichtung des Radarsensors (160) in Abhängigkeit von dem Vergleich zu bestimmen;
wobei die eine oder mehrere Erfassungen von Gegenständen, die für den Vergleich verwendet werden, mindestens eine Erfassung mit einer zugehörigen Qualitätsmessung der Erfassung einschließen, wobei die zugehörige Qualitätsmessung unterhalb einer Schwellenqualität liegt; und
wobei die mindestens eine Erfassung mit der zugehörigen Qualitätsmessung unterhalb der Schwellenqualität ausschließlich für den zweiten Ausrichtungsbestimmungsprozess verwendet wird.

2. Steuersystem nach Anspruch 1, wobei der zweite Ausrichtungsbestimmungsprozess das Bestimmen umfasst, dass der Radarsensor ausgerichtet ist, wenn mindestens ein Anteil der einen oder der mehreren erfassten Gegenstände jeweilige Relativgeschwindigkeiten aufweist, die im Wesentlichen der zugehörigen Geschwindigkeit des Fahrzeugs (200) entsprechen.

3. Steuersystem nach Anspruch 1 oder 2, wobei das Steuersystem zum Vergleich der Relativgeschwindigkeit jedes der einen oder mehreren erfassten Gegenstände mit der zugehörigen Geschwindigkeit des Fahrzeugs konfiguriert ist, um:
die zugehörige Geschwindigkeit des Fahrzeugs (200) als die Geschwindigkeit des Fahrzeugs zu dem Zeitpunkt zu bestimmen, zu dem jeder der einen oder mehreren Gegenstände erfasst wurde; und
zu bestimmen, ob die Relativgeschwindigkeit jedes der einen oder mehreren erfassten Gegenstände innerhalb eines Geschwindigkeitsfensters liegt, wobei das Geschwindigkeitsfenster in Abhängigkeit von der zugehörigen Geschwindigkeit des Fahrzeugs (200) bestimmt wird.

4. Steuersystem nach Anspruch 3, wobei das Steuersystem konfiguriert ist, um:
einen Anteil der Erfassungen, deren Relativgeschwindigkeit innerhalb des Geschwindigkeitsfensters liegt, im Verhältnis zur Gesamtzahl der einen oder mehreren Erfassungen zu bestimmen;
wobei der zweite Ausrichtungsbestimmungsprozess das Bestimmen umfasst, dass der Radarsensor (160) falsch ausgerichtet ist, wenn der bestimmte Anteil der Erfassungen, deren Relativgeschwindigkeit innerhalb des Geschwindigkeitsfensters liegt, kleiner ist als ein erster vorbestimmter Anteil.

5. Steuersystem nach Anspruch 4, wobei der zweite Ausrichtungsbestimmungsprozess das Bestimmen umfasst, dass der Radarsensor (160) ausgerichtet ist, wenn der bestimmte Anteil der Erfassungen mit einer Relativgeschwindigkeit innerhalb des Geschwindigkeitsfensters größer oder gleich dem ersten vorbestimmten Anteil ist.

6. Steuersystem nach einem der Ansprüche 1 bis 4, wobei das Steuersystem konfiguriert ist, um:
einen Abstand zwischen dem Fahrzeug (200) und jedem der einen oder mehreren erfassten Gegenstände zu bestimmen; und
einen Anteil der Erfassungen von Gegenständen, die sich in einem Abstand von mehr als einem vorbestimmten Abstand vom Fahrzeug (200) befinden, im Verhältnis zur Gesamtzahl der einen oder mehreren Erfassungen zu bestimmen;
wobei der zweite Ausrichtungsbestimmungsprozess das Bestimmen umfasst, dass der Radarsensor (160) falsch ausgerichtet ist, wenn der bestimmte Anteil der Erfassungen von Gegenständen, die sich in einem Abstand von mehr als einem vorbestimmten Abstand vom Fahrzeug (200) befinden, kleiner als ein zweiter vorbestimmter Anteil ist.

7. Steuersystem nach Anspruch 6, das von Anspruch 4 abhängt, wobei der zweite Ausrichtungsbestimmungsprozess Folgendes umfasst: Bestimmen, dass der Radarsensor (160) ausgerichtet ist, wenn der bestimmte Anteil der Erfassungen mit einer Relativgeschwindigkeit innerhalb des Geschwindigkeitsfensters größer oder gleich dem ersten vorbestimmten Anteil ist und der bestimmte Anteil der Erfassungen von Gegenständen, die sich in einem Abstand von mehr als einem vorbestimmten Abstand vom Fahrzeug (200) befinden, größer oder gleich dem zweiten vorbestimmten Anteil ist.

8. Steuersystem nach Anspruch 6 oder Anspruch 7, wobei der vorbestimmte Abstand auf der zugehörigen Geschwindigkeit des Fahrzeugs (200) basiert und wobei der vorbestimmte Abstand gegebenenfalls als der Abstand bestimmt wird, der das Fahrzeug (200) bei der zugehörigen Geschwindigkeit in einer vorbestimmten Zeit zurücklegt.

9. Steuersystem nach einem der vorstehenden Ansprüche, wobei das Steuersystem ein Ausgabemittel (130) umfasst, das konfiguriert ist, um in Abhängigkeit vom zweiten Ausrichtungsbestimmungsprozess eine Anzeige einer Fehlausrichtung des Radarsensors (160) auszugeben, und wobei das Steuersystem optional konfiguriert ist, um:
das Ausgabemittel (130) so zu steuern, dass es die Anzeige ausgibt, nachdem eine vorbestimmte Zeit seit dem Bestimmen der Fehlausrichtung des Radarsensors (160) verstrichen ist; oder
einen Zähler basierend auf der zugehörigen Fahrzeuggeschwindigkeit zu aktualisieren und die Anzeige auszugeben, wenn der Zähler einen vorbestimmten Wert erreicht;
wobei das Steuersystem konfiguriert ist, um den Zähler zurückzusetzen, wenn gemäß dem zweiten Ausrichtungsbestimmungsprozess bestimmt wird, dass der Radarsensor (160) ausgerichtet ist.

10. Steuersystem nach einem der vorstehenden Ansprüche, wobei das Steuersystem konfiguriert ist, um:
zu bestimmen, ob sich das Fahrzeug (200) in einer Geländeumgebung befindet;
die Bestimmung der Relativgeschwindigkeit der erfassten Gegenstände, den Vergleich der Relativgeschwindigkeit der erfassten Gegenstände mit der zugehörigen Fahrzeuggeschwindigkeit sowie den zweiten Ausrichtungsbestimmungsprozess auszulösen, wenn bestimmt wird, dass sich das Fahrzeug (200) nicht in einer Geländeumgebung befindet; und
das Bestimmen der Relativgeschwindigkeit der erfassten Gegenstände, den Vergleich der Relativgeschwindigkeit der erfassten Gegenstände mit der zugehörigen Fahrzeuggeschwindigkeit sowie den zweiten Ausrichtungsbestimmungsprozess auszusetzen, wenn bestimmt wird, dass sich das Fahrzeug (200) in einer Geländeumgebung befindet, und optional,
wobei das Steuersystem konfiguriert ist, um eine Neigung des Bodens an einem aktuellen Standort des Fahrzeugs (200) zu bestimmen, und zu bestimmen, dass sich das Fahrzeug in einer Geländeumgebung befindet, wenn die bestimmte Neigung größer ist als eine vorbestimmte Schwellenneigung.

11. Steuersystem nach einem der vorstehenden Ansprüche, wobei das Steuersystem konfiguriert ist, um:
die Anzahl der Kanäle des Radarsensors (160), die einen Gegenstand erfassen, aus einer Vielzahl von Kanälen des Radarsensors (160) zu bestimmen;
die Bestimmung der Relativgeschwindigkeit des erfassten Gegenstands, den Vergleich der Relativgeschwindigkeit des erfassten Gegenstands mit der zugehörigen Geschwindigkeit des Fahrzeugs sowie den zweiten Ausrichtungsbestimmungsprozess auszulösen, wenn die Anzahl der Kanäle des Radarsensors (160), die Gegenstände erfassen, kleiner ist als eine vorbestimmte Anzahl von Kanälen; und
die Bestimmung der Relativgeschwindigkeit des erfassten Gegenstands, den Vergleich der Relativgeschwindigkeit des erfassten Gegenstands mit der zugehörigen Geschwindigkeit des Fahrzeugs sowie den zweiten Ausrichtungsbestimmungsprozess auszusetzen, wenn die Anzahl der Kanäle des Radarsensors (160), die Gegenstände erfassen, gleich oder größer als eine vorbestimmte Anzahl von Kanälen ist, und optional,
wobei die vorbestimmte Anzahl von Kanälen auf einem Verhältnis der Anzahl der Kanäle der Vielzahl von Kanälen des Radarsensors (160) basiert.

12. Steuersystem nach einem der vorstehenden Ansprüche, wobei der zweite Ausrichtungsbestimmungsprozess durchgeführt wird, wenn der erste Ausrichtungsbestimmungsprozess bestimmt, dass der Radarsensor (160) falsch ausgerichtet ist, oder wenn die Radardaten unzureichende Erfassungen mit zugehörigen Qualitätsmesswerten umfassen, die über der Schwellenqualität für das Durchführen des ersten Ausrichtungsbestimmungsprozesses liegen.

13. Fahrzeug (200), umfassend das Steuersystem (110) nach einem der vorstehenden Ansprüche sowie einen Radarsensor (160), der eingerichtet ist, um dem Steuersystem (110) Radardaten zu liefern, die eine oder mehrere Erfassungen von Gegenständen in der Umgebung des Fahrzeugs (200) anzeigen.

14. Verfahren (300) zum Bestimmen der Ausrichtung eines Radarsensors (160) eines Fahrzeugs (200), das Verfahren umfassend:
Empfangen (310) von Radardaten vom Radarsensor (160), die eine oder mehrere Erfassungen von Gegenständen in der Umgebung des Fahrzeugs (200) anzeigen;
Durchführen (320) eines ersten Ausrichtungsbestimmungsprozesses, um die Ausrichtung eines Sichtfelds des Radarsensors (160) und einer Längsachse des Fahrzeugs (200) in Abhängigkeit von den empfangenen Radardaten zu bestimmen;
Bestimmen (330) einer Relativgeschwindigkeit jedes der einen oder mehreren erfassten Gegenstände in Bezug auf das Fahrzeug (200);
Vergleichen (340) der Relativgeschwindigkeit jedes der einen oder mehreren erfassten Gegenstände mit einer zugehörigen Geschwindigkeit des Fahrzeugs (200); und **dadurch gekennzeichnet, dass** das Verfahren ferner Folgendes umfasst
Durchführen (350) eines zweiten Ausrichtungsbestimmungsprozesses, um die Ausrichtung des Radarsensors (160) in Abhängigkeit von dem Vergleich zu bestimmen;
wobei die eine oder mehrere Erfassungen von Gegenständen, die für den Vergleich verwendet werden, mindestens eine Erfassung mit einer zugehörigen Qualitätsmessung der Erfassung einschließen, wobei die zugehörige Qualitätsmessung unterhalb einer Schwellenqualität liegt; und
wobei die mindestens eine Erfassung mit der zugehörigen Qualitätsmessung unterhalb der Schwellenqualität ausschließlich für den zweiten Ausrichtungsbestimmungsprozess verwendet wird.

15. Computersoftware, die, wenn sie durch einen Computer ausgeführt wird, eingerichtet ist, um ein Verfahren nach Anspruch 14 durchzuführen; wobei optional die Computersoftware auf einem computerlesbaren Medium gespeichert ist.

## Revendications

1. Système de commande (110) destiné à être utilisé avec un véhicule (200) ayant un capteur radar (160), le système de commande comprenant un ou plusieurs dispositifs de commande (120), le système de commande étant configuré pour :
recevoir (310) des données radar à partir du capteur radar (160) indiquant une ou plusieurs détections d'objets dans un environnement du véhicule (200) ;
effectuer (320) un premier processus de détermination d'alignement pour déterminer l'alignement d'un champ de vision du capteur radar (160) et d'un axe longitudinal du véhicule (200) en fonction des données radar reçues ;
déterminer (330) une vitesse relative par rapport au véhicule (200) de chacun de l'un ou plusieurs objets détectés ;
comparer (340) la vitesse relative de chacun de l'un ou plusieurs objets détectés à une vitesse associée du véhicule (200) ; et **caractérisé en ce que** le système de commande étant configuré en outre pour
effectuer (350) un second processus de détermination d'alignement pour déterminer l'alignement du capteur radar (160) en fonction de la comparaison ;
dans lequel l'une ou plusieurs détections d'objets utilisés pour la comparaison comportent au moins une détection ayant une mesure de qualité associée à la détection, la mesure de qualité associée étant inférieure à une qualité seuil ; et
dans lequel l'au moins une détection ayant la mesure de qualité associée inférieure à la qualité seuil est uniquement utilisée pour le second processus de détermination d'alignement.

2. Système de commande selon la revendication 1, dans lequel le second processus de détermination d'alignement comprend la détermination que le capteur radar est aligné lorsqu'au moins une proportion de l'un ou plusieurs objets détectés ont des vitesses relatives respectives sensiblement similaires à la vitesse associée du véhicule (200).

3. Système de commande selon la revendication 1 ou 2, dans lequel, pour comparer la vitesse relative de chacun de l'un ou plusieurs objets détectés à la vitesse associée du véhicule, le système de commande est configuré pour :
déterminer la vitesse associée du véhicule (200) en tant que vitesse du véhicule à un moment où chacun de l'un ou plusieurs objets ont été détectés ; et
déterminer si la vitesse relative de chacun de l'un ou plusieurs objets détectés se situe au sein d'une fenêtre de vitesse, dans laquelle la fenêtre de vitesse est déterminée en fonction de la vitesse associée du véhicule (200).

4. Système de commande selon la revendication 3, dans lequel le système de commande est configuré pour :
déterminer une proportion de détections ayant une vitesse relative au sein de la fenêtre de vitesse par comparaison avec un nombre total de l'une ou plusieurs détections ;
dans lequel le second procédé de détermination d'alignement comprend la détermination que le capteur radar (160) est désaligné lorsque la proportion déterminée de détections ayant une vitesse relative au sein de la fenêtre de vitesse est inférieure à une première proportion prédéterminée.

5. Système de commande selon la revendication 4, dans lequel le second processus de détermination d'alignement comprend la détermination que le capteur radar (160) est aligné lorsque la proportion déterminée de détections ayant une vitesse relative au sein de la fenêtre de vitesse est supérieure ou égale à la première proportion prédéterminée.

6. Système de commande selon l'une quelconque des revendications 1 à 4, dans lequel le système de commande est configuré pour :
déterminer une distance entre le véhicule (200) et chacun de l'un ou plusieurs objets détectés ; et
déterminer une proportion de détections d'objets à plus d'une distance prédéterminée du véhicule (200) par comparaison avec le nombre total de l'une ou plusieurs détections ;
dans lequel le second processus de détermination d'alignement comprend la détermination que le capteur radar (160) est désaligné lorsque la proportion déterminée de détections d'objets à plus d'une distance prédéterminée du véhicule (200) est inférieure à une seconde proportion prédéterminée.

7. Système de commande selon la revendication 6 dépendante de la revendication 4, dans lequel le second processus de détermination d'alignement comprend :
la détermination que le capteur radar (160) est aligné lorsque la proportion déterminée de détections ayant une vitesse relative au sein de la fenêtre de vitesse est supérieure ou égale à la première proportion prédéterminée, et la proportion déterminée de détections d'objets à plus d'une distance prédéterminée du véhicule (200) est supérieure ou égale à la seconde proportion prédéterminée.

8. Système de commande selon la revendication 6 ou 7, dans lequel la distance prédéterminée est basée sur la vitesse associée du véhicule (200), et éventuellement, dans lequel la distance prédéterminée est déterminée comme une distance parcourue par le véhicule (200) à la vitesse associée du véhicule en un temps prédéterminé.

9. Système de commande selon l'une quelconque revendication précédente, dans lequel le système de commande comprend un moyen de sortie (130) configuré pour émettre une indication de désalignement du capteur radar (160) en fonction du second processus de détermination d'alignement, et éventuellement, dans lequel le système de commande est configuré pour :
commander le moyen de sortie (130) pour émettre l'indication après qu'un temps prédéterminé s'est écoulé suite à la détermination du désalignement du capteur radar (160) ; ou
mettre à jour un compteur en fonction de la vitesse de véhicule associée, et émettre l'indication lorsque le compteur atteint un nombre prédéterminé ;
dans lequel, lorsqu'il est déterminé selon le second processus de détermination d'alignement que le capteur radar (160) est aligné, le système de commande est configuré pour réinitialiser le compteur.

10. Système de commande selon l'une quelconque revendication précédente, dans lequel le système de commande est configuré pour :
déterminer si le véhicule (200) est dans un environnement hors route ;
déclencher la détermination de la vitesse relative des objets détectés, la comparaison de la vitesse relative de l'objet détecté à la vitesse de véhicule associée, et le second processus de détermination d'alignement lorsqu'il est déterminé que le véhicule (200) n'est pas dans l'environnement hors route ; et
suspendre la détermination de vitesse relative d'objet détecté, la comparaison de la vitesse relative d'objet détecté à la vitesse de véhicule associée, et le second processus de détermination d'alignement lorsqu'il est déterminé que le véhicule (200) est dans l'environnement hors route, et éventuellement,
dans lequel le système de commande est configuré pour déterminer une pente du sol à un emplacement actuel du véhicule (200), et pour déterminer que le véhicule est dans l'environnement hors route lorsque la pente déterminée est supérieure à une pente seuil prédéterminée.

11. Système de commande selon l'une quelconque revendication précédente, dans lequel le système de commande est configuré pour :
déterminer un nombre de canaux du capteur radar (160) qui détectent un objet parmi une pluralité de canaux du capteur radar (160) ;
déclencher la détermination de vitesse relative d'objet détecté, la comparaison de la vitesse relative d'objet détecté à la vitesse de véhicule associée, et le second processus de détermination d'alignement lorsque le nombre de canaux du capteur radar (160) qui détectent des objets est inférieur à un nombre prédéterminé de canaux ; et
suspendre la détermination de la vitesse relative d'objet détecté, la comparaison de la vitesse relative d'objet détecté à la vitesse de véhicule associée, et le second processus de détermination d'alignement lorsque le nombre de canaux du capteur radar (160) qui détectent des objets est égal ou supérieur à un nombre prédéterminé de canaux, et éventuellement,
dans lequel le nombre prédéterminé de canaux est basé sur un rapport d'un nombre de la pluralité de canaux du capteur radar (160).

12. Système de commande selon l'une quelconque revendication précédente, dans lequel le second processus de détermination d'alignement est effectué lorsque le premier processus de détermination d'alignement détermine que le capteur radar (160) est désaligné, ou lorsque les données radar comprennent des détections insuffisantes ayant des mesures de qualité associées supérieures à la qualité seuil permettant d'effectuer le premier processus de détermination d'alignement.

13. Véhicule (200) comprenant le système de commande (110) selon l'une quelconque des revendications précédentes, et un capteur radar (160) agencé pour fournir au système de commande (110) des données radar indiquant une ou plusieurs détections d'objets dans un environnement du véhicule (200).

14. Procédé (300) permettant de déterminer l'alignement d'un capteur radar (160) d'un véhicule (200), le procédé comprenant :
la réception (310) de données radar à partir du capteur radar (160) indiquant une ou plusieurs détections d'objets dans un environnement du véhicule (200) ;
la mise en œuvre (320) d'un premier processus de détermination d'alignement pour déterminer l'alignement d'un champ de vision du capteur radar (160) et d'un axe longitudinal du véhicule (200) en fonction des données radar reçues ;
la détermination (330) d'une vitesse relative par rapport au véhicule (200) de chacun de l'un ou plusieurs objets détectés ;
la comparaison (340) de la vitesse relative de chacun de l'un ou plusieurs objets détectés à une vitesse associée du véhicule (200) ; et
**caractérisé en ce que** le procédé comprend en outre
la mise en œuvre (350) d'un second processus de détermination d'alignement pour déterminer l'alignement du capteur radar (160) en fonction de la comparaison ;
dans lequel l'une ou plusieurs détections d'objets utilisés pour la comparaison comportent au moins une détection ayant une mesure de qualité associée à la détection, la mesure de qualité associée étant inférieure à une qualité seuil ; et
dans lequel l'au moins une détection ayant la mesure de qualité associée inférieure à la qualité seuil est uniquement utilisée pour le second processus de détermination d'alignement.

15. Logiciel informatique qui, lorsqu'il est exécuté par un ordinateur, est agencé pour effectuer un procédé selon la revendication 14 ; éventuellement le logiciel informatique étant stocké sur un support lisible par ordinateur.
